# EUROPEAN PATENT SPECIFICATION

(11) **EP 4 018 843 B1**
(45) Date of publication and mention of the grant of the patent: **29.07.2026**
(21) Application number: 21197862.2
(22) Date of filing: 08.12.2014
(51) Int. Cl.: A23L 27/30

(54) **MODULATION OF BITTERNESS AND MOUTHFEEL VIA SYNERGISTIC MIXTURES OF LONG CHAIN FATTY ACIDS**
MODULATION DER BITTERKEIT UND DES MUNDGEFÜHLS ÜBER SYNERGISTISCHE MISCHUNGEN VON LANGKETTIGEN FETTSÄUREN
MODULATION DE L'AMERTUME ET DE LA SENSATION EN BOUCHE PAR DES MÉLANGES SYNERGIQUES D'ACIDES GRAS À LONGUE CHAÎNE

(30) Priority: 20.12.2013 US 201361918709 P
(43) Date of publication of application: 29.06.2022
(62) Divisional of application: 14872060.0
(73) Proprietor: Pepsico Inc, Purchase, New York 10577 (US)
(72) Inventor: AGLIONE, Anthony, New Jersey, 07662 (US); CASSUTT, Kelly J, New Jersey, 08873 (US); DRAGAN, Sofya, New York, 10918 (US); GRAVINA, Stephen, New Jersey, 07070 (US); KURASH, Yuliya, New York, 10519 (US); JOHNSON, Winsome, New York, 10562 (US)
(74) Representative: Page White Farrer

(56) References cited:
- DE-U1- 202008 006 164
- JP-A- 2008 263 903
- DATABASE GNPD [online] MINTEL; 16 January 2013 (2013-01-16), ANONYMOUS: "Nourishing Drink", XP055921699, retrieved from https://www.gnpd.com/sinatra/recordpage/1969642/ Database accession no. 1969642
- DATABASE GNPD [online] MINTEL; 23 June 2011 (2011-06-23), ANONYMOUS: "Aroma Impact Low Sugar Special Select Coffee", XP055921694, retrieved from https://www.gnpd.com/sinatra/recordpage/1580927/ Database accession no. 1580927
- DATABASE GNPD [online] MINTEL; 22 April 2010 (2010-04-22), ANONYMOUS: "Honey and Pear Syrup for Childen", XP055921696, retrieved from https://www.gnpd.com/sinatra/recordpage/1313029/ Database accession no. 1313029
- LEY J P ED - SIMONS CHRISTOPHER T: "Masking bitter taste by molecules", CHEMOSENSORY PERCEPTION, SPRINGER NEW YORK LLC, US, vol. 1, 1 January 2008 (2008-01-01), pages 58 - 77, XP002543471, ISSN: 1936-5802, [retrieved on 20080213], DOI: 10.1007/S12078-008-9008-2

## Description

### FIELD OF THE INVENTION

The invention relates to beverages and beverage concentrates. In particular, this invention relates to beverages and beverage concentrates having formulations incorporating non-nutritive sweeteners and having suitable to meet market demand for nutritional characteristics and/or flavor profiles in beverages.

### BACKGROUND OF THE INVENTION

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

It is an object of the present invention to provide beverages and other beverage products. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

Database GNPD, accession no. 1969642 (XP 055921699) discloses a nourishing drink.

Database GNPD, accession no. 1580927 (XP 055921694) discloses Aroma Impact low sugar special select coffee.

Database GNPD, accession no. 1313029 (XP 055921696) discloses a honey and pear syrup for children.

JP 2008-263903 A discloses a food or drink with lower fatty acid as a flavor reinforcer.

DE 20 2008 006164 U1 discloses the use of a polyoxyethylene sorbitan fatty acid ester for taste modulation.

### BRIEF SUMMARY OF THE INVENTION

In accordance with one aspect, a beverage according to claim 1 is provided. The beverage includes water. The beverage is sweetened with at least one non-nutritive sweetener and further comprises a combination of linoleic acid and heptanoic acid in combined amount sufficient to reduce (i.e., to partially, substantially or completely eliminate) a bitter off-note taste of the non-nutritive sweetener. The concentration of the combined linoleic acid and heptanoic acid in the beverage is between 50 parts per trillion and 500 parts per million, or between 1 part per million and 250 parts per million. The at least one non-nutritive sweetener is at least one steviol glycoside, or Rebaudioside A.

In accordance with another aspect of the invention, a beverage concentrate according to claim 3 is provided.

Certain more specific aspects of the invention are set out in the dependent claims.

### BRIEF DESCRIPTION OF THE DRAWINGS

Figure 1 shows results from samples evaluated for heaviness/weight.
Figure 2 shows results from samples evaluated for perceived viscosity.
Figure 3 shows results from samples evaluated for syrupy in mouth.
Figure 4 shows results from samples evaluated for syrupy mouthcoating.
Figure 5 shows results from samples evaluated for cola flavor.
Figure 6 shows results from samples evaluated for sweet taste.
Figure 7 shows results from samples evaluated CO₂ Flavor.
Figure 8 shows results from samples evaluated for Perceived Carbonation.
Figure 9 shows results from samples evaluated for Bite/Tingle.
Figure 10 shows results from samples evaluated for Chemical Solvent Flavor.
Figure 11 shows results from samples evaluated for True Bitter taste.
Figure 12 shows results from samples evaluated for Astringent.
Figure 13 shows results from samples evaluated for Sour Taste.

### DETAILED DESCRIPTION

Described herein are beverages having improved organoleptic properties often referred to as taste and beverage concentrates (syrups) useful in making such beverages.

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant and flavoring. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweetener, kola nut extract and/or other flavoring, caramel coloring, phosphoric acid, and optionally other ingredients. Additional and alternative suitable ingredients will be recognized by those skilled in the art given the benefit of this disclosure.

The present invention utilizes certain combinations of fatty acids. Fatty acids in general are carboxylic acids with a long aliphatic tail (chain), which is either saturated or unsaturated. Most naturally occurring fatty acids have a chain of an even number of carbon atoms, from 4 to 28. Fatty acids are usually derived from triglycerides or phospholipids. Fatty acids often add in adverse tastes to beverages such as rancidity, pungency, cheese-like, or spoiled goat milk tastes.

It was discovered that certain combinations of fatty acids provide unexpected results in the properties of certain beverages which do not occur by the same fatty acids by themselves or prior combinations thereof.

As used herein, "taste" refers to a combination of sweetness perception, temporal effects of sweetness perception, i.e., on-set, intensity, and duration, off-tastes, e.g. bitterness and metallic taste, and residual perception (aftertaste).

Bitterness or bitter off-note taste refers to a sharpness of taste such as acidity. Bitterness is often associated with certain drinks such as coffee or beverages containing caffeine or quinine. Bitterness is also associated with certain non-nutritive sweeteners such as aspartame, Rebaudioside A and other steviol glycosides. It has long been sought in the art to address the problems of bitterness in reduced and low calorie beverages that utilize such non-nutritive sweeteners.

Mouthfeel is a tactile perception and means the body and perceived thickness of the beverage upon consumption. Generally it is desired to provide a reduced or low calorie beverage having the mouthfeel of a full calorie beverage made from sugar such as sucrose or high fructose corn syrup.

### Linoleic acid and heptanoic acid

In accordance with one aspect of the invention as defined in claim 1, a beverage is provided. The beverage comprises a combination of linoleic acid and heptanoic acid in a combined amount sufficient to reduce (i.e., to partially, substantially or completely eliminate) a bitter off-note taste of a non-nutritive sweetener(s) and optionally caffeine present in the beverage.

The non-nutritive sweetener is a steviol glycoside, e.g., rebaudiosides such as Rebaudioside A, rebaudioside B, rebaudioside C, rebaudioside D, rebaudioside E, or rebaudioside F, dulcoside A, stevioside, etc. or related compounds, or mixtures of any of them, for sweetening. Of particular interest is Rebaudioside A.

Linoleic acid (LA) is an unsaturated omega-6 fatty acid. It is a colorless liquid at room temperature. Chemically, linoleic acid is a carboxylic acid with an 18-carbon chain and two "cis" double bonds; the first double bond is located at the sixth carbon from the omega end. In vitro, gamma-linoleic, monolinoleic, linolenic also showed similar activity.

Heptanoic acid, also called enanthic acid, is a saturated fatty acid. Specifically, it is an organic compound composed of a seven-carbon chain terminating in a carboxylic acid.

Alone, linoleic acid and hepatnoic acid do not provide suitable results, such as reducing or eliminating the bitterness of a beverage containing Rebaudioside A. For example, the beverage may be less sweet if linoleic acid is used alone or have no activity if heptanoic acid is used alone.

It was discovered that the combination of linoleic acid and heptanoic acid reduces a bitter off-note taste of the non-nutritive sweetener while maintaining sweetness of the beverage. That is the combination blocks bitterness as it retains the sweetness.

The total concentration of the combined linoleic acid and heptanoic acid may be between about 0.001 wt% and about 1.0 wt%, e.g., between about 0.05 wt% and about 0.55 wt%, based on total weight of the beverage. In accordance with present claim 1, the concentration of the combined linoleic acid and heptanoic acid in the beverage is between 50 parts per trillion and 500 parts per million, e.g., between 1 part per million and 250 parts per million.

The ratio of linoleic acid to heptanoic acid may be 1:10000 to 1:1.

A beverage comprises at least a combination of water, a non-nutritive sweetener, linoleic acid and heptanoic acid wherein the combination of linoleic acid and heptanoic acid reduces a bitter off-note taste of the non-nutritive sweetener. The bitter off-note taste is reduced by at least 50 %, at least 60 %, at least 70 %, at least 80 %, or at least 90% over a beverage containing the non-nutritive sweetener without the linoleic acid and heptanoic acid.

If needed, the beverage may further contain an acid blocker to an astringency blocker which reduces sourness or astringency. Suitable acid/astringency blockers include, but are not limited to mint factions and menthol factions WS-3, WS-23, FrescolatMGA, FrescolatML, PMD38, CoolactP, and Cooling Agent 10.

Typically the fatty acids are first dissolved in a solvent and then added to a beverage or beverage concentrate. Any suitable food grade solvent may be used such as, but not limited to, propylene glycol and ethanol.

As discussed in further detail below, the beverage may further contain additional sweeteners, flavorings, electrolytes, vitamins, fruit juices or other fruit products, tastents, masking agents and the like, flavor enhancers, preservatives, and/or carbonation. Optionally, caffeine can be added.

Although any beverage is contemplated as discussed in further detail below, the present invention is particularly useful in cola products, lemon-lime carbonated beverages, and flavored nutritional waters containing non-nutritive sweeteners such as Rebaudioside A.

Without being bound by theory, it is believed that linoleic and heptanoic acid in combination, and as described above, act synergistically to reduce or eliminate the bitterness associated with rebaudioside A in beverages. Specifically, it is believed that the combination of linoleic and heptanoic acids block binding of RebA to T2R14 and T2R4 but not to T1R2. Inhibition of T2R14 and T2R4 internalization by combination of linoleic and heptanoic acids lead to blocking of RebA-mediated bitterness while still maintaining sweetness and flavor profile.

### Seven fatty acids and three aldehydes (a reference example)

In accordance with a reference example, a beverage is provided. In particular, the beverage comprises a combination of fatty acids and aldehydes. The beverage is sweetened with at least one non-nutritive sweetener and further comprises a combination of caprylic acid, caproic acid, and butyric acid. This composition may further comprise heptanoic acid, lauric acid, propionic acid, and isovaleric acid. In addition to these fatty acids, aldehydes are included in the beverage, in particular decanal, nonanal, and 2-methyl-butyraldehyde. The components are present in an amount to improve mouthfeel while mitigating any adverse tastes of the fatty acids.

Alone, fatty acids do not provide suitable results. For example, the beverage may be too watery or may be perceived as thicker but lack syrupy mouthfeel. Further, fatty acids often provide adverse tastes.

It was discovered that the combination of at least caprylic acid, caproic acid, and butyric acid improves mouthfeel of a beverage containing the non-nutritive sweetener without making the beverage too pungent or astringent.

It was further discovered that mouthfeel could be further improved by the addition of one, two, three, or all of the following fatty acids: heptanoic acid, lauric acid, propionic acid, and isovaleric acid.

The inventors also found that the addition of aldehydes provides improved mouthfeel i addition to mitigating the adverse tastes of the fatty acids. Decanal, nonanal, and 2-methyl-butyraldehyde are particularly useful in combination with the fatty acids.

In certain reference examples, the weight percent of the long chain fatty acid compounds in the beverage is between about 0.001 wt% and about 1.0 wt%, e.g., between about 0.05 wt% and about 0.55 wt%, based on total weight of the beverage. In certain reference examples, the concentration of total fatty acids in the beverage is between about 50 parts per trillion and about 500 parts per million, e.g., between about 1 part per million and about 250 parts per million.

In certain reference examples, the weight percent of the aldehydes in the beverage is between about 0.001 wt% and about 1.0 wt%, e.g., between about 0.005 wt% and about 0.55 wt%, based on total weight of the beverage. In certain reference examples, the concentration of total fatty acids in the beverage is between about 50 parts per trillion and about 500 parts per million, e.g., between about 1 part per million and about 250 parts per million.

A reference example beverage comprises at least a combination of water, a non-nutritive sweetener, a combination of caprylic acid, caproic acid, and butyric acid, and a combination of aldehydes. In another reference example, the composition may further comprise one, two, three, or all of heptanoic acid, lauric acid, propionic acid, and isovaleric acid. In yet another reference example, the aldehydes are a combination of decanal, nonanal, and/or 2-methyl-butyraldehyde.

When sugar is reduced in a beverage, often backend sourness or astringency arises. To eliminate backend sourness or astringency, the beverage may further contain an acid blocker to an astringency blocker which also improves mouthfeel. Suitable acid/astringency blockers include, but are not limited to mint factions and menthol factions. Such blockers may further provide a fuller mouthfeel.

Typically the fatty acids are first dissolved in a solvent and then added to a beverage or beverage concentrate. Any suitable food grade solvent may be used such as, but not limited to, propylene glycol and ethanol.

As discussed in more detail below, the beverage may further contain additional sweeteners, flavorings, electrolytes, vitamins, fruit juices or other fruit products, tastents, masking agents and the like, flavor enhancers, preservatives, and/or carbonation. Optionally, caffeine can be added.

Although any beverage is contemplated as discussed in further detail below, the present invention is particularly useful in cola products, lemon-lime carbonated beverages, sport beverages, juices, tea, and flavored nutritional waters containing non-nutritive sweeteners such as Rebaudioside A.

### General Aspects

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid, slurry or solid concentrates, flavored waters, enhanced waters, fruit juice and fruit juice-flavored drinks, sport drinks, and alcoholic products.

At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water", "purified water", "demineralized water", "distilled water", and "r-o water" are understood to be generally synonymous in this discussion, referring to water from which substantially all mineral content has been removed, typically containing no more than about 500 ppm total dissolved solids, e.g. 250 ppm total dissolved solids.

The term "nutritive sweetener" refers generally to sweeteners which provide significant caloric content in typical usage amounts, e.g., more than about 5 calories per 227 mL (8 oz.) serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed.

As used herein, a "non-nutritive sweetener" is one which does not provide significant caloric content in typical usage amounts, i.e., is one which imparts less than 5 calories per 227 mL (8 oz.) serving of beverage to achieve the sweetness equivalent of 10 Brix of sugar.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various embodiments of the beverages disclosed here include nutritive and non-nutritive, natural and artificial or synthetic sweeteners. Suitable non-nutritive sweeteners and combinations of such sweeteners are selected for the desired nutritional characteristics, taste profile for the beverage, mouthfeel and other organoleptic factors. Non-nutritive sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc. acesulfame, aspartame, other dipeptides, cyclamate, sucralose, saccharin, xylose, arabinose, isomalt, lactitol, maltitol, trehalose, and ribose, and protein sweeteners such as thaumatin, monellin, brazzein, L-alanine and glycine, related compounds, and mixtures of any of them. Lo Han Guo, steviol glycosides, e.g., rebaudiosides such as Rebaudioside A, stevioside, etc. and related compounds, as discussed further below, are natural potent sweeteners.

It will be within the ability of those skilled in the art, given the benefit of this disclosure, to select suitable non-nutritive sweetener (e.g., one or combination of non-nutritive sweeteners, either alone or together with nutritive sweetener) for a particular embodiment of the beverage products disclosed here employing long chain fatty acids to mask a bitter off-note taste of the non-nutritive sweetener.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, Lo Han Guo juice concentrate and/or others. Such sweeteners are present in at least certain exemplary embodiments in an amount of from about 0.1% to about 20% by weight of the beverage, such as from about 6% to about 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of non-sugar solids which could adversely affect the flavor, color or consistency of the beverage.

The sweeteners are edible consumables suitable for consumption and for use in beverages. By "edible consumables" is meant a food or beverage or an ingredient of a food or beverage for human or animal consumption. The sweetener or sweetening agent used can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per 29.6 mL (fluid ounce) of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, the beverages of the invention as defined in claim 1 employ steviol glycosides, e.g., rebaudiosides such as Rebaudioside A, rebaudioside B, rebaudioside, rebaudioside D, rebaudioside E, dulcoside A, stevioside, etc. or related compounds, or mixtures of any of them, for sweetening. These compounds can be obtained by extraction or the like from the stevia plant. Stevia (e.g., *Stevia rebaudiana bectoni*) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. The following nonsweet constituents also have been identified in the leaves of stevia plants: labdane, diterpene, triterpenes, sterols, flavonoids, volatile oil constituents, pigments, gums and inorganic matter.

As used herein, a "full-calorie" beverage formulation is one fully sweetened with a nutritive sweetener. As used herein, "reduced calorie beverage" means a beverage having at least a 25 % reduction in calories per 227 mL (8 oz.) serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 227 mL (8 oz.) for beverages. The correlative meaning applies to beverage concentrates and other beverage products disclosed here. In certain exemplary embodiments, the beverage may be a diet beverage. The beverage may be sweetened entirely with one or more non-nutritive sweeteners or with a combination of nutritive and non-nutritive sweeteners.

Unless clearly stated otherwise, reference here to a non-nutritive sweetener or to a non-nutritive sweetener component means one or more non-nutritive sweeteners. That is, the non-nutritive sweetener may be a single sweetener or a combination of non-nutritive sweeteners. In those embodiments employing multiple non-nutritive sweeteners, the off taste may be contributed by one or more of them.

In certain exemplary embodiments the non-nutritive sweetener is used together with nutritive sweetener, e.g., sugar, glucose-fructose syrup from natural sources such as apple, chicory, honey, etc., e.g., high fructose corn syrup (HFCS), Lo Han Guo juice concentrate or the like.

The long-chain fatty acids, as utilized within the scope of the invention, may include both natural and synthetic forms of organic acids. In certain exemplary embodiments, both synthetic and natural fatty acids are used in conjunction to achieve one or more benefits, such as reducing the off-note taste of one or more non-nutritive sweeteners. Naturally occurring long chain fatty acids may be derived from animal and vegetable fats. Synthetic fatty acids may be produced by a wide variety of methods known to those skilled in the art. As one example, fatty acids may be produced by hydrolyzing the ester linkages in fat and/or oil by removal of glycerol.

In the beverage products disclosed here, the long chain fatty acid combination is a masking agent for masking one or more off-notes of one or more non-nutritive sweeteners. For example, while non-nutritive sweeteners provide a characteristic and desirable sweet flavor, non-nutritive sweeteners may also provide non-sweet off-notes. For example, steviol glycosides, e.g., rebaudiosides such as Rebaudioside A, stevioside, etc. and other non-nutritive sweeteners are often accompanied by metallic or bitter off-notes. Thus, according to certain embodiments of the invention, the combination of linoleic acid and heptanoic acid is utilized in an amount sufficient to reduce the bitter off-notes of the steviol glycosides. The quantity of the linoleic acid and heptanoic acid used to mask the off notes depend on a myriad of factors, including the type of beverage, environmental conditions in manufacturing, distributing and storing the beverages, the beverage flavor profile, pH of the beverage, among other factors.

Acid used in beverages disclosed here refers to non-long chain fatty acids and can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01 % to about 1.0 % by weight of the beverage, e.g., from about 0.05 % to about 0.5 % by weight of the beverage, such as 0.1 % to 0.25 % by weight of the beverage, depending upon the acidulant used, desired pH, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04 % by weight, with an amount of about 0.03 % being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, tangerine, mandarin orange, tangelo, and pomelo and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2 % to about 40 % by weight of the beverage. Typically, juice can be used, if at all, in an amount of from about 1 % to about 20 % by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3 % of the mixture of flavorings and emulsifier. In certain exemplary embodiments the emulsifier is from about 5 % to about 30 % of the mixture.

Carbon dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 16°C (60°F) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1 % and about 100 % RDV, where such RDV are established. In certain exemplary embodiments the non-mineral nutritional supplement ingredient(s) are present in an amount of from about 5 % to about 20 % RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05 % by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. Discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 87.8°C (190°F) for 10 seconds, tunnel pasteurization methods typically using lower temperatures for a longer time, e.g., about 71.1°C (160°F) for 10-15 minutes, and retort methods typically using, e.g., about 121.1°C (250°F) for 3-5 minutes at elevated pressure, i.e., at pressure above 1 atmosphere.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage syrup, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

### Example 1 - Bitter Blocker (a reference example)

Six fatty acids were evaluated individually for their effect on reducing bitter perception of Reb-A (500 ppm) relative to 100% Reb A (500 ppm), 25% reduced Reb A (375 ppm) and 50% reduced Reb A (250 ppm) benchmarks. The compounds tested were caprylic acid, heptanoic acid, valeric acid, caproic acid, lauric acid, and linoleic acid in amounts of 0.0005 wt% to 0.55 wt% in ethanol.

Twenty five trained panelists received sample sets containing four samples: 100 % Reb A (Control); 25 % reduced Reb A; 50 % reduced Reb A; and 100 % Reb A and bitter blocker. Panelists ranked samples in order of bitterness intensity, from low bitter to high bitter. Each set of samples was evaluated twice. Based on the results, linoleic acid significantly reduced the bitterness perception of Reb-A. Caprylic acid and heptanoic acid showed marginal effectiveness in reducing bitterness. Valeric acid, caproic acid, and lauric acid did not show significant bitterness masking ability and myrcene was not effective in reducing bitterness. These examples showed evidence for bitterness mitigation.

### Example 2 - Mouthfeel

Rheology of a beverage is dominated by Brix. For example, a full calorie beverage containing HFCS has higher viscosity or fuller mouthfeel than a beverage having 25 % reduced HFCS or a beverage having 50 % reduced HFCS. In reduced calorie (reduced HFCS) colas, it is a goal to achieve the same sweetness and mouthfeel of full calorie/ HFCS colas.

GRAS compounds were evaluated for their efficacy as mouthfeel enhancers in reduced HFCS colas. The compounds were evaluated in both 25% reduced and 50% reduced HFCS cola bases. Full HFCS cola was included as the benchmark sample and both the 25% reduced HFCS cola and 50% reduced HFCS cola bases were included as control samples. Flavor #16 is an inventive sample.

Descriptive analysis panelists rated the intensity of mouthfeel attributes and sweetness for the 14 cola samples.
- Benchmark and Reduced HFCS Controls
   ∘ # 906 - 50 % reduced HFCS Control
   ∘ # 907 - 25 % reduced HFCS Control
   ∘ # 908 - Full HFCS Benchmark
- 50% Reduced HFCS Variants
   ∘ # 909 - KSS042111A v.3 @ 0.03 %
   ∘ # 910 - SIE @ 0.045 %
   ∘ # 911 - Flavor #16 @ 0.04 %
   ∘ # 912 - H63 @ 0.095 %
   ∘ # 913 - H63/RMW @ 0.095 %
- 25% Reduced HFCS Variants
   ∘ # 914 - TA #1 (Taste Advantage) @ 0.02 %
   ∘ # 915 - Flavor #16 @ 0.04 %
   ∘ # 916 - SIE @ 0.045 %
   ∘ # 917 - H63 @ 0.095 %
   ∘ # 918 - H63/RMW
   ∘ # 919 - KSS042111A v.3 @ 0.03 %

The samples were evaluated for various properties including 1) heaviness/weight; 2) perceived viscosity; 3) syrupy in mouth; 4) syrupy mouthcoating; 5) cola flavor; 6) sweet taste; 7) CO₂ Flavor; 8) Perceived Carbonation; 9) Bite/Tingle; 10) Chemical Solvent Flavor; 11) True Bitter taste; 12) Astringent; and 13) Sour Taste. The results are set forth below.

The desirable result in all of the categories is the sample to most resemble the full calorie beverage.

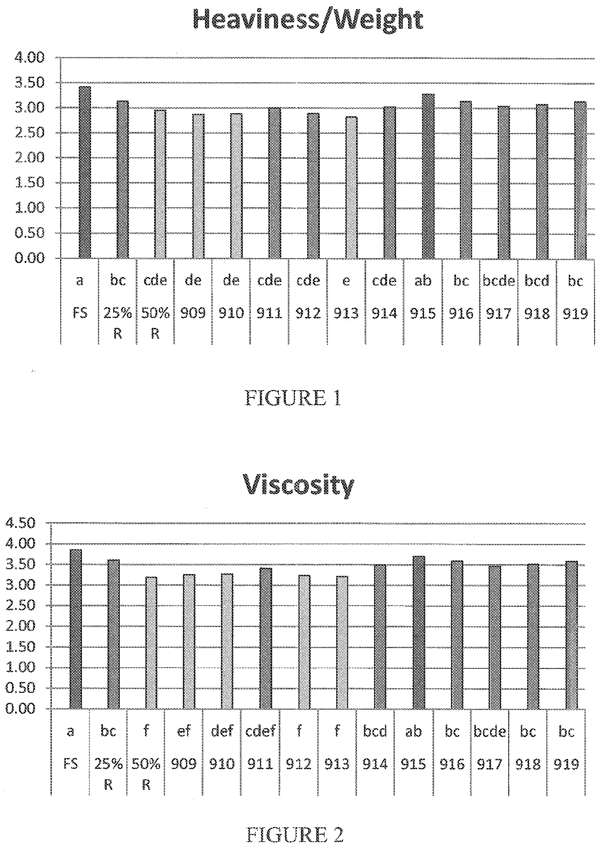

### Heaviness, Figure 1

25% Reduced HFCS Variants (#914-919): Compound #915 is not different from either Full HFCS Benchmark or 25 % reduced HFCS control for Heaviness/Weight. Remaining 25 % reduced HFCS variants are not different from either 25 % reduced HFCS or 50 % reduced HFCS controls.

50% Reduced HFCS Variants (#909-913): Compounds #911 and #912 approach the 25% are not different from either 25 % reduced HFCS or 50 % reduced HFCS controls for Heaviness/Weight. Remaining 50 % reduced HFCS variants are not different from 50% reduced HFCS control.

### Perceived Viscosity, Figure 2

25 % Reduced HFCS Variants (#914-919): Compound #915 is not different from the Full HFCS Benchmark for Viscosity. Remaining 25 % reduced HFCS variants are not different from 25 % reduced HFCS control.

50 % Reduced HFCS Variants (#909-913): Compound #911 approaches the Viscosity of 25% reduced HFCS control. Remaining 50 % reduced HFCS variants are not different than 50 % reduced HFCS control.

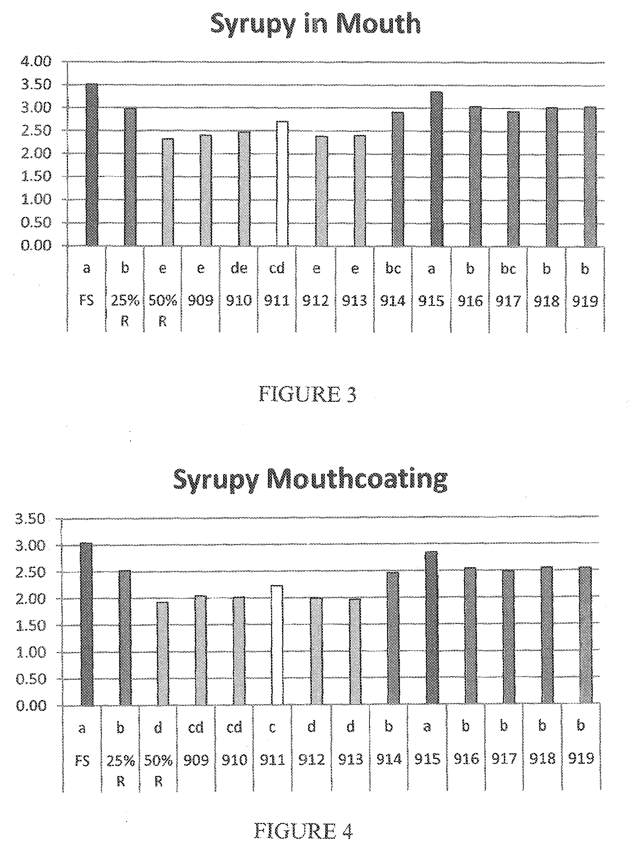

### Syrupy in Mouth, Figure 3

25 % Reduced HFCS Variants (#914-919): Compound #915 is not different from the Full HFCS Benchmark for Viscosity. Remaining 25 % reduced HFCS variants are not different from 25 % reduced HFCS control

50 % Reduced HFCS Variants (#909-913): Compound #911 approaches the Viscosity of 25 % reduced HFCS control. Remaining 50 % reduced HFCS variants are not different than 50% reduced HFCS control

### Syrupy Mouthcoating, Figure 4

25 % Reduced HFCS Variants (#914-919): Compound #915 is similar to Full HFCS Benchmark for Syrupy Mouthcoating. Remaining 25 % reduced HFCS variants are not different than 25% reduced HFCS control

50 % Reduced HFCS Variants (#909-913): Compound #911 is one of the highest in this group for Syrupy Mouthcoating. Lower than the 25 % reduced HFCS control but higher than the 50 % reduced HFCS control. Remaining 50 % reduced HFCS variants are not different from 50 % reduced HFCS control.

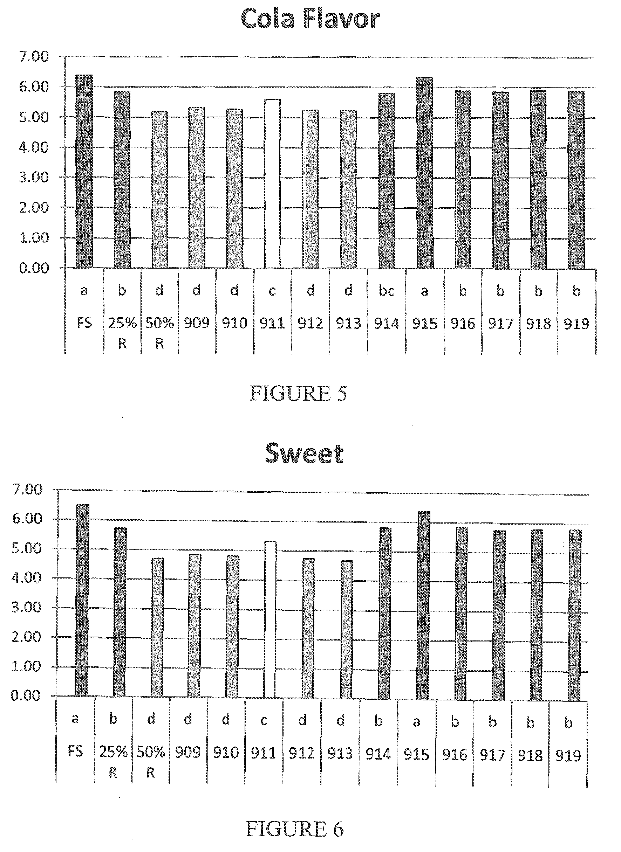

### Cola Flavor, Figure 5

25 % Reduced HFCS Variants (#914-919): Compound #915 is similar to Full HFCS Benchmark for Cola Flavor intensity. Remaining 25% reduced HFCS variants are not different from 25 % reduced HFCS control

50 % Reduced HFCS Variants (#909-913): Compound #911 has the most Cola Flavor. More Cola Flavor than 50 % reduced HFCS control but not as much as 25 % reduced HFCS control. Remaining 50 % reduced HFCS variants are not different from 50 % reduced HFCS control.

### Sweet Taste, Figure 6

25 % Reduced HFCS Variants (#914-919): #915 is similar to Full HFCS Benchmark for sweet taste. Remaining 25 % reduced HFCS variants are not different from 25 % reduced HFCS control.

50 % Reduced HFCS Variants (#909-913): #911 has the most sweet taste. More sweet taste than 50 % reduced HFCS control but not as much as 25 % reduced HFCS control. Remaining 50 % reduced HFCS variants are not different from 50 % reduced HFCS control.

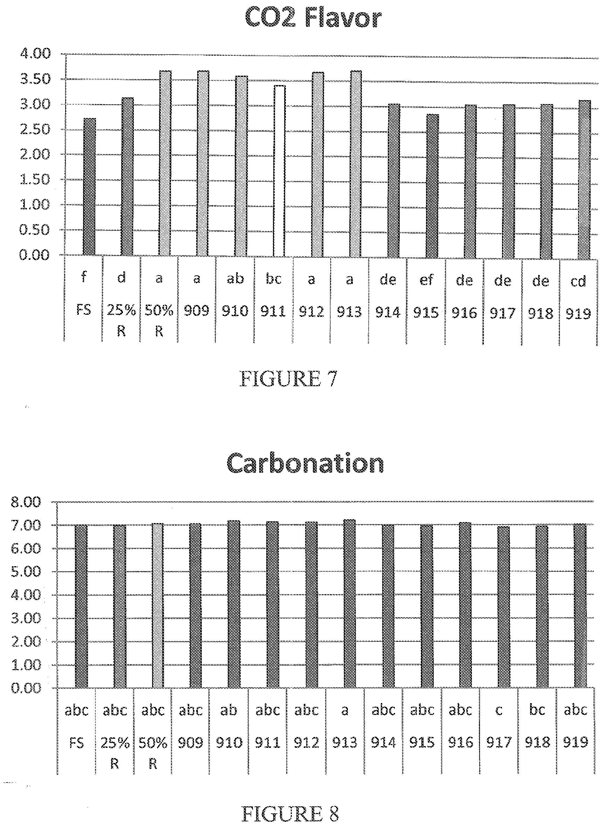

### CO2 Flavor, Figure 7

25 % Reduced HFCS Variants (#914-919): #915 is similar to Full HFCS Benchmark for CO2 Flavor intensity. Remaining 25 % reduced HFCS variants are not different from 25 % reduced HFCS control.

50 % Reduced HFCS Variants (#909-913): #911 has the most least CO2 Flavor. Less Cola Flavor than 50 % reduced HFCS control but more than 25 % reduced HFCS control. Remaining 50 % reduced HFCS variants are not different from 50 % reduced HFCS control.

### Perceived Carbonation, Figure 8

None of the samples differ for perceived Carbonation.

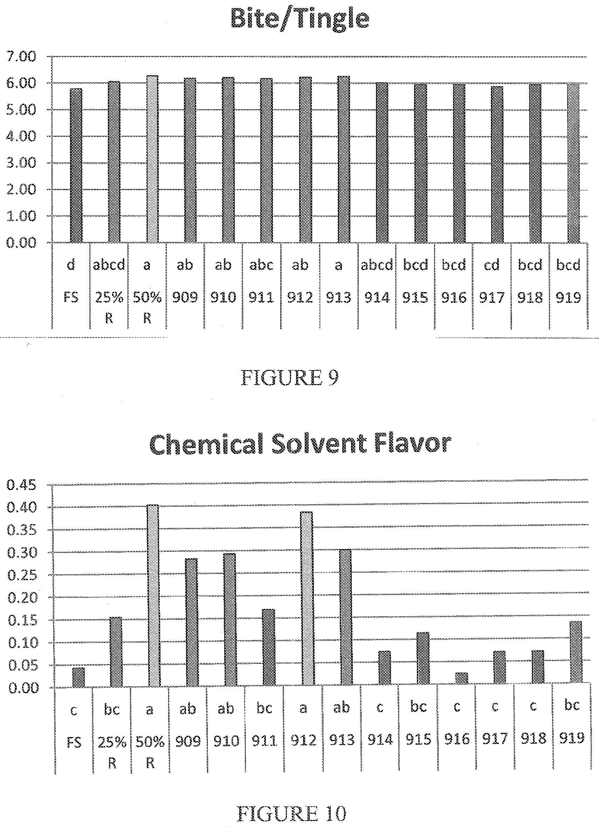

### Bite/Tingle, Figure 9

25 % Reduced HFCS Variants (#914-919): None differ from Full HFCS Benchmark or 25 % reduced HFCS control. #914 is also not different from 50 % reduced HFCS control.

50 % Reduced HFCS Variants (#909-913): None differ from 25 % reduced HFCS control. None differ from 50 % reduced HFCS control.

### Chemical Solvent Flavor, Figure 10

25 % Reduced HFCS Variants (#914-919): None differ from the Full HFCS Benchmark. Compounds #915 and #919 are also not different from 25 % reduced HFCS control.

50 % Reduced HFCS Variants (#909-913): Compound #911 is not different from either Full HFCS Benchmark or 25% reduced HFCS control. Compounds #909, #910 and #913 are not different from either 25 % reduced HFCS or 50 % reduced HFCS controls. Remaining 50 % reduced HFCS variants are not different from 50 % reduced HFCS control.

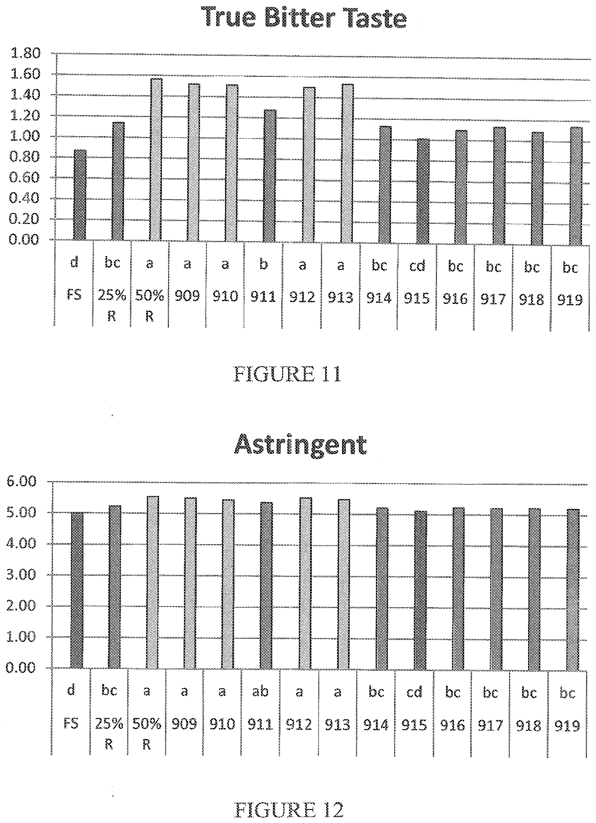

### True Bitter taste, Figure 11

25 % Reduced HFCS Variants (#914-919): Compound #915 is not different from Full HFCS Benchmark or 25% reduced HFCS control for True Bitter Taste. Remaining 25% reduced HFCS variants are not different than 25 % reduced HFCS control.

50 % Reduced HFCS Variants (#909-913): Compound #911 is similar to 25% reduced HFCS control. Remaining 50 % reduced HFCS variants are not different than 50% reduced HFCS control.

### Astringent, Figure 12

25 % Reduced HFCS Variants (#914-919): Compound #915 is not different from Full HFCS Benchmark or 25 % reduced HFCS control for True Bitter Taste. Remaining 25 % reduced HFCS variants are not different than 25% reduced HFCS control.

50 % Reduced HFCS Variants (#909-913): Compound #911 is similar to 25 % reduced HFCS control. Remaining 50 % reduced HFCS variants are not different than 50 % reduced HFCS control.

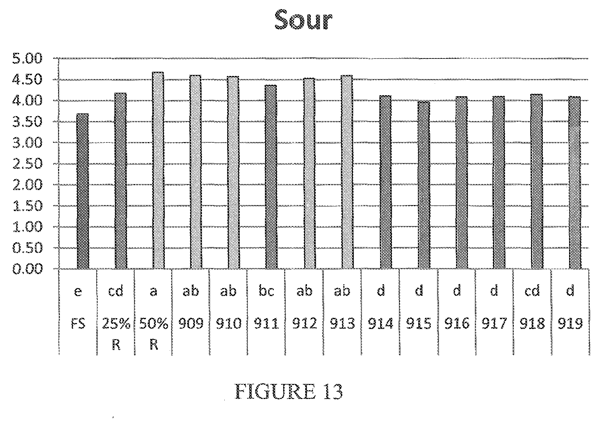

### Sour Taste, Figure 13

25 % Reduced HFCS Variants (#914-919): Compound #915 is not different from Full HFCS Benchmark or 25 % reduced HFCS control for True Bitter Taste. Remaining 25 % reduced HFCS variants are not different than 25% reduced HFCS control.

50 % Reduced HFCS Variants (#909-913): Compound #911 is similar to 25 % reduced HFCS control. Remaining 50 % reduced HFCS variants are not different than 50 % reduced HFCS control.

It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A beverage comprising:
water;
at least one non-nutritive sweetener having a bitter off-note taste;
linoleic acid; and
heptanoic acid;
wherein the at least one non-nutritive sweetener is at least one steviol glycoside, or Rebaudioside A; and
wherein the concentration of the combined linoleic acid and heptanoic acid in the beverage is between 50 parts per trillion and 500 parts per million, or between 1 part per million and 250 parts per million.

2. The beverage of claim 1 further comprising an acid or astringency blocker, or a menthol faction or a mint faction.

3. A beverage concentrate for a beverage comprising: at least one non-nutritive sweetener having an off-note taste, wherein the at least one non-nutritive sweetener is at least one steviol glycoside, or Rebaudioside A; linoleic acid; and heptanoic acid present in an amount sufficient to reduce the off-note taste of the non-nutritive sweetener when the concentrate is mixed with a diluent to make a beverage; wherein the linoleic acid and heptanoic acid are present in a combined amount between 300 parts per trillion and 3,000 parts per million, or between 6 parts per million and 1,500 parts per million.

4. The beverage concentrate of claim 3, further comprising an acid or astringency blocker, or a menthol faction or a mint faction.

## Patentansprüche

1. Getränk, umfassend:
Wasser;
mindestens einen nicht nahrhaften Süßstoff mit einem bitteren Nebengeschmack;
Linolsäure; und
Heptansäure;
wobei der mindestens eine nicht nahrhafte Süßstoff mindestens ein Steviolglykosid oder Rebaudiosid A ist; und
wobei die Konzentration der kombinierten Linolsäure und Heptansäure in dem Getränk zwischen 50 Teilen pro Billion und 500 Teilen pro Million oder zwischen 1 Teil pro Million und 250 Teilen pro Million liegt.

2. Getränk nach Anspruch 1, ferner umfassend einen Säure- oder Adstringenzblocker oder eine Mentholfraktion oder eine Minzfraktion.

3. Getränkekonzentrat für ein Getränk, umfassend: mindestens einen nicht nahrhaften Süßstoff mit einem bitteren Nebengeschmack, wobei der mindestens eine nicht nahrhafte Süßstoff mindestens ein Steviolglykosid oder Rebaudiosid A ist; Linolsäure; und Heptansäure, in einer Menge vorliegend, die dazu ausreicht, den Nebengeschmack des nicht nahrhaften Süßstoffs zu verringern, wenn das Konzentrat mit einem Verdünnungsmittel gemischt wird, um ein Getränk herzustellen; wobei die Linolsäure und die Heptansäure in einer kombinierten Menge zwischen 300 Teilen pro Billion und 3000 Teilen pro Million oder zwischen 6 Teilen pro Million und 1500 Teilen pro Million vorliegen.

4. Getränkekonzentrat nach Anspruch 3, ferner umfassend einen Säure- oder Adstringenzblocker oder eine Mentholfraktion oder eine Minzfraktion.

## Revendications

1. Une boisson comprenant :
de l'eau ;
un ou plusieurs édulcorants non nutritifs ayant un arrière-goût d'amertume ;
de l'acide linoléique ; et
de l'acide heptanoïque ;
dans laquelle le ou les édulcorants non nutritifs sont soit du glycoside de stéviol, soit du Rebaudioside A ; et
dans laquelle la concentration de l'acide linoléique et de l'acide heptanoïque combinés dans la boisson est entre 50 parties par trillion et 500 parties par million, ou entre 1 partie par million et 250 parties par million.

2. La boisson selon la revendication 1, comprenant en outre un acide ou bloqueur d'astringence, ou une faction de menthol ou une faction de menthe.

3. Un concentré de boisson pour une boisson comprenant :
un ou plusieurs édulcorants non nutritifs ayant un arrière-goût, dans lequel le ou les édulcorants non nutritifs sont soit du glycoside de stéviol, soit du Rebaudioside A ;
de l'acide linoléique ; et
de l'acide heptanoïque, présents dans une quantité suffisante pour réduire l'arrière-goût de l'édulcorant non nutritif lorsque le concentré est mélangé avec un diluant pour faire une boisson ;
dans lequel l'acide linoléique et l'acide heptanoïque sont présents dans une quantité combinée entre 300 parties par trillion et 3000 parties par million, ou entre 6 parties par million et 1500 parties par million.

4. Le concentré de boisson selon la revendication 3, comprenant en outre un acide ou bloqueur d'astringence, ou une faction de menthol ou une faction de menthe.
